# FASCICULE DE BREVET EUROPEEN

(11) **EP 2 602 169 B1**
(45) Date de publication et mention de la délivrance du brevet: **30.08.2017**
(21) Numéro de dépôt: 12196005.8
(22) Date de dépôt: 07.12.2012
(51) Int. Cl.: B61L 23/04, E01B 3/28, G01G 3/12, G01G 19/04

(54) **Support en béton instrumenté pour rails de voie ferrée**
Betonschwelle mit Meßinstrumenten für Eisenbahnschienen
Instrumented concrete sleeper for railway rails

(30) Priorité: 09.12.2011 FR 1161406
(43) Date de publication de la demande: 12.06.2013
(73) Titulaire: Sateba Systeme Vagneux, 92400 Courbevoie (FR); Cementys, 75013 Paris (FR)
(72) Inventeur: Loaec, Arnaud, 94250 Gentilly (FR); Lanticq, Vincent, 69003 Lyon (FR); Lamour, Vincent, 75013 Paris (FR)
(74) Mandataire: Regimbeau

(56) Documents cités:
- EP-A1- 0 468 397
- EP-A1- 1 521 072
- WO-A1-00/23770
- WO-A1-00/37900
- WO-A1-2009/062464
- US-A- 5 330 136

## Description

### DOMAINE TECHNIQUE GENERAL ET CONTEXTE DE L'INVENTION

La présente invention se rapporte d'une façon générale aux supports de rails de voies ferrées destinées à la circulation de véhicules, notamment des trains, des métros ou des tramways. L'invention concerne plus précisément un support en béton instrumenté comportant des instruments de mesure noyés dans le béton constituant ledit support.

Les supports de rails pour voie ferrée sont des objets placés sous les rails afin de fournir à ceux-ci un support adapté aux contraintes auxquelles les rails sont soumis et à maintenir l'écartement des rails tout en répartissant les charges sur l'assise de ces support de rails, par exemple du ballast ou une dalle en béton. Par exemple, ces supports peuvent être des traverses ou encore des supports pour appareil de voie au niveau des aiguillages.

Les supports de rails de voies ferrées doivent avoir une durée de vie très longue, de l'ordre de plusieurs décennies, malgré les multiples contraintes auxquelles ils sont soumis. Ces contraintes proviennent notamment du passage de charges sur les rails supportés par les supports, d'autant plus importantes que la vitesse du matériel roulant est élevée ou que ces charges sont mal réparties. En outre, les supports de rails doivent supporter les aléas climatiques résultant de leur disposition généralement en extérieur.

La fatigue résultant de ces contraintes peut entraîner l'apparition de faiblesse mécanique, voire des fissures. La détérioration mécanique des supports de rails peut avoir des conséquences très graves si le comportement mécanique des supports de rails en est altéré. De ce fait la conception des supports de rails est aujourd'hui plus basée sur le retour d'expérience que sur la connaissance fine des sollicitations auxquelles ces supports de rails sont soumis en voie.

Il existe donc un besoin pour la mesure de ces contraintes/sollicitations et du vieillissement des supports de rails, tout en n'engendrant pas de maintenance supplémentaire. Des jauges de déformation basées sur la variation de résistance électrique ont parfois été accolées à la surface de supports de rails pour en mesurer les déformations.

Cependant, ces jauges de déformation nécessitent une alimentation électrique et sont sensibles à l'environnement électrique, ce qui les rend peu électro-compatibles avec des lignes électriques de puissance couramment utilisées.

Ces jauges de déformation ont une longueur réduite et ne mesurent les contraintes que très localement.

En outre, ces jauges sont exposées aux aléas climatiques et aux détériorations mécaniques, par exemple par jet de ballast, et nécessitent donc une maintenance lourde et des réétalonnages fréquents qui limitent leur déploiement à grande échelle.

L'accolement des jauges nécessite généralement l'emploi d'une substance adhésive qui nuit à la durabilité des mesures. La qualité des mesures est généralement aléatoire car dépendant du bon contact entre la jauge et le support de rails sur laquelle la jauge est disposée. De plus, situées sur les contours du support de rails, il est parfois difficile de rendre compte des déformations et contraintes internes du support de rails au moyen de telles jauges.

Le document WO 00/37900 A1 décrit un dispositif de pesage pour véhicules sur rails dans lequel un capteur de contrainte en cisaillement est placé sur l'axe neutre du rail, et un capteur dynamométrique est disposé dans un boîtier, lui-même placé dans un renfoncement dans la traverse. Le capteur n'est dans ce cas pas directement au contact du béton.

Le document WO 2009/062464 A1 décrit un support de voie comportant des moyens de stockage d'informations qui peuvent être placés dans le béton du support de voie, et comporter un instrument de mesure.

### PRESENTATION DE L'INVENTION

L'invention a pour but de pallier au moins un de ces défauts, préférentiellement tous. A cet effet, on propose un support en béton pour rails de voie ferrée comprenant
- des emplacements destinés à supporter des rails,
- une direction principale selon laquelle sont répartis lesdits emplacements destinés à supporter des rails,
le support comportant des instruments de mesure noyés dans le béton constituant ledit support, au moins un desdits instruments de mesure étant un capteur extensométrique à fibre optique noyé dans le béton dudit support afin de mesurer les contraintes subies par le béton, ledit capteur en fibre optique comportant un élément sensible s'étendant selon une direction.

L'invention est avantageusement complétée par les caractéristiques suivantes, prises seules ou en une quelconque de leur combinaison techniquement possible:
- des instruments de mesure sont noyés dans béton du support en regard des emplacements destinés à supporter les rails ;
- ledit au moins un capteur extensométrique à fibre optique comporte un élément sensible inscrit ou inclus dans la fibre optique ;
- ledit au moins un capteur extensométrique à fibre optique est un capteur interférométrique ;
- l'élément sensible dudit capteur en fibre optique est orienté dans un plan vertical, perpendiculairement à la direction principale du support ;
- le support comporte au moins un capteur à élément sensible orienté verticalement sous chacun d'au moins deux emplacements destinés à supporter des rails, lesdits capteurs étant adaptés pour effectuer des mesures de compression sous chacun des rails afin d'effectuer des mesures de contrainte servant à calculer des charges telles que le pesage d'un essieu d'un véhicule présent sur les rails ;
- l'élément sensible dudit capteur en fibre optique est orienté parallèlement à la direction principale du support ;
- la traverse comporte au moins un capteur à élément sensible orienté parallèlement à la direction principale du support sous chacun des emplacements destinés à supporter des rails et/ou entre ces emplacement, lesdits capteurs à élément sensible orienté parallèlement à la direction principale du support étant adaptés pour effectuer des mesures de déformation du support de rail sous une charge présente sur les rails afin d'évaluer des moments fléchissant au seins du support de rail en béton ;
- au moins un desdits instruments de mesure est un capteur de température ;
- le capteur extensométrique présente une extension de son corps d'épreuve dans sa direction principale d'au moins 5 cm ;
- au moins deux capteurs extensométriques noyés dans le béton du support sont localisés de part et d'autre d'un axe correspondant à l'axe de l'âme du rail que le support est destiné à supporter.

L'invention concerne également un système de mesure comprenant au moins un support de rails en béton selon l'invention, et des moyens de connexion des instruments de mesure dudit au moins un support en béton à un dispositif de recueil et de traitement de données pour évaluer les contraintes auxquelles est soumis ledit au moins un support en béton à partir des mesures relevées par lesdits instruments de mesure.

De préférence, au moins un desdits instruments de mesure est connecté par une liaison filaire au dispositif de recueil et de traitement de données.

L'invention présente de nombreux avantages. Un support de rails selon l'invention permet d'évaluer les contraintes auxquelles est soumis le support de rails en béton à partir des mesures relevées par les instruments de mesure. L'invention permet ainsi de vérifier le dimensionnement du support, ainsi que d'effectuer des contrôles de fissuration du support. De plus l'invention peut permettre d'identifier des variations de portance sous les supports de rails ou des défauts de matériel roulant et ainsi permettre de déclencher des opérations de maintenance sur la voie ou le matériel roulant.

L'invention permet la mesure des contraintes au coeur du béton du support sur une longueur importante du fait de la taille du capteur.

L'invention permet également de mesurer la compression sous les rails pour peser un essieu d'un véhicule circulant sur les rails. Elle permet aussi de vérifier la déformation du support sous les rails perpendiculairement à la charge, afin d'évaluer les moments fléchissant. Toutes ces mesures peuvent être réalisées de façon dynamique à haute fréquence (plusieurs dizaines de kHz), permettant de réaliser des mesures durant le passage de charges à grande vitesse.

Dans la mesure où les instruments de mesure sont noyés dans la masse du béton constituant le support de rails, un support de rails selon l'invention assure l'étanchéité et la protection desdits instruments de mesure, leur assurant ainsi une longue durée de vie tout en minimisant la maintenance nécessaire pour y parvenir.

De plus, la disposition des instruments de mesure dans le coeur du support de rails permet la détermination précise du comportement de la structure bétonnée du support. Il n'y a pas besoin alors d'ajouter de colle ou d'autres matériaux intermédiaires susceptibles de détériorer la qualité de la mesure. Les instruments de mesure sont ainsi en contact direct avec le béton, et en subissent les contraintes et déformations. La mesure de celles-ci en est donc grandement améliorée.

### PRESENTATION DES FIGURES

D'autres caractéristiques, buts et avantages de l'invention ressortiront de la description qui suit, qui est purement illustrative et non limitative, et qui doit être lue en regard des dessins annexés parmi lesquels :
- les figures 1a et 1b sont des schémas en coupe d'un support de rails selon l'invention prenant la forme d'une traverse monobloc ;
- les figures 2a et 2b sont des schémas en coupe d'un support de rails en béton selon l'invention prenant la forme d'une traverse bi-bloc ;
- les figures 3a et 3b sont des schémas en coupe d'un support de rails en béton selon l'invention prenant la forme d'un support pour appareil de voie ;
- la figure 4 est un schéma en coupe d'une partie d'un support de rails selon un mode de réalisation possible de l'invention, dans lequel au moins deux capteurs extensométriques à fibre optiques noyés dans le béton du support sont localisés de part et d'autre d'un axe correspondant à l'axe de l'âme d'un rail que le support est destiné à supporter.

### DESCRIPTION DETAILLEE

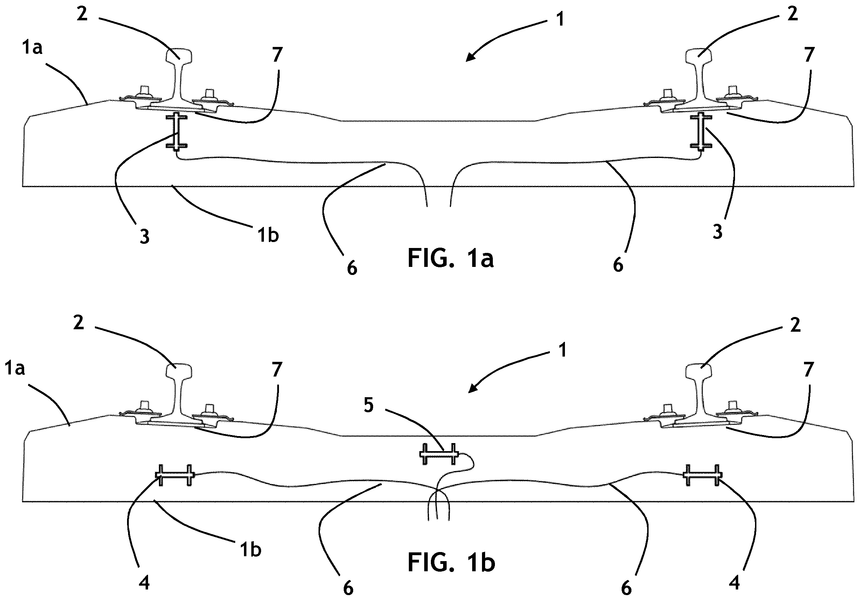

En référence aux figures 1a, 1b, 2a, 2b, 3a et 3b, un support en béton selon l'invention comporte
- des emplacements 7 destinés à supporter des rails 2,
- une direction principale selon laquelle sont répartis lesdits emplacements 7 destinés à supporter des rails,
le support 1 comportant des instruments de mesure 3, 4, 5 noyés dans le béton constituant ledit support 1. La direction principale correspond à la direction longitudinale du support. Les emplacements 7 destinés à supporter des rails correspondent aux zones prévues pour la réception des rails, généralement munies d'un système d'attache pour maintenir ces rails 2 sur les emplacements 7.

Les instruments de mesure sont noyés dans le béton au moment où celui-ci est coulé, de sorte que les instruments de mesure font partie de la structure du support 1. Le fait de noyer les instruments de mesure assure l'étanchéité et le contact direct entre ceux-ci et le béton qui les entoure, sans qu'il soit besoin d'ajouter de colle ou d'autres matériaux intermédiaires susceptibles de détériorer la qualité de la mesure.

Des instruments de mesure 3, 4 sont positionnés dans le support 1 en béton en regard des emplacements 7 destinés à supporter les rails 2.

Les instruments de mesure comprennent au moins un capteur à à fibre optique noyé dans le béton de la traverse 1. Les capteurs à fibre optique présentent de nombreux avantages pour cette application. Notamment,
- ils sont peu intrusifs,
- ils présentent une immunité électromagnétique, notamment en regard des lignes électriques, par exemple les caténaires, ou face à la foudre,
- la silice constituant les fibres optiques ne présentent pas de dérives qui nécessiteraient un réétalonnage régulier des capteurs,
- des déports de plusieurs kilomètres sont possibles en raison des faibles pertes de signaux, inférieures à 0,2 dB.km⁻¹.

Les instruments de mesure peuvent également comprendre un capteur de température, par exemple un thermocouple, de préférence localisé à proximité d'un capteur extensométrique à fibre optique, afin que la connaissance de la température au niveau de ce capteur extensométrique à fibre puisse servir à la correction des mesures issues du capteur extensométrique à fibre optique.

Le capteur extensométrique à fibre optique présente de préférence une extension de son corps d'épreuve dans sa direction principale d'au moins 5 cm, de préférence entre 5 cm et 15 cm, afin de moyenner les mesures réalisées, tout en pouvant rendre compte de l'apparition de défauts localisés tels que des fissures.

Les instruments de mesure 3, 4, 5 comprennent ainsi au moins un capteur extensométrique à fibre optique 3, 4, 5 noyé dans le béton dudit support 1 afin de mesurer les contraintes subies par le béton, ledit capteur en fibre optique 3, 4, 5 comportant un élément sensible s'étendant selon une direction.

De tels capteurs à fibre optique sont beaucoup plus durables que les jauges de contraintes électroniques traditionnelles, et sont notamment beaucoup moins sensibles aux perturbations de l'environnement proche. En outre, ils présentent l'avantage d'être des capteurs passifs ne nécessitant pas d'alimentation autre que lumineuse. La très bonne tenue à la fatigue des capteurs à fibre optique en comparaison avec les capteurs à jauges résistives permet une instrumentation durable du support 1 pendant sa durée de vie.

La mesure est faite selon un codage en longueur d'onde (réseaux de Bragg) ou en phase (cavités interférométriques), donc insensible aux pertes d'intensité des signaux. En décalant les spectres réfléchis (codage en longueur d'onde), ou les longueurs de cavités (codage en phase) de plusieurs capteurs (en prenant en compte l'étendue maximale de mesure), on peut obtenir un multiplexage de plusieurs capteurs le long d'une même fibre optique, pouvant aller jusqu'à 10 ou 20 capteurs.

Optionnellement, des dièdres ou trièdres de capteurs peuvent être utilisés pour quantifier l'état de contrainte local.

Dans un mode de réalisation préféré, les instruments de mesure 3, 4, 5 comprennent au moins un capteur en fibre optique dans le béton du support 1 afin de mesurer les contraintes subies par le béton, ledit capteur en fibre optique 3, 4, 5 comportant un élément sensible inscrit ou inclus dans une fibre optique.

De préférence, au moins un capteur à fibre optique 3, 4 est positionné dans le support 1 en béton en regard des emplacements 7 destinés à supporter les rails 2.

Un capteur en fibre optique à réseau de Bragg comprend un segment de fibre optique présentant une variation périodique de l'indice de réfraction du coeur de la fibre. On obtient ainsi un réflecteur sélectif qui transmet les signaux d'un spectre lumineux incident, à l'exception des signaux lumineux d'un spectre réfléchi autour d'une longueur d'onde dit de Bragg.

La disposition géométrique de la variation périodique de l'indice de réfraction est affectée par les contraintes subies par la fibre optique. On observe alors un déplacement du spectre des signaux réfléchis proportionnelle à la déformation longitudinale du capteur.

Un capteur à fibre optique interférométrique contient une ou plusieurs cavités interne à la fibre (de type Fabry-Perot ou Michelson) dont les surfaces réfléchissantes sont réalisées à partir de métallisations ou de dioptres. Les faisceaux de lumière provenant de chaque surface réfléchissante sont susceptibles en se superposant de réaliser des interférences sur un détecteur déporté.

Le système d'interrogation (interféromètre) permet, en analysant le contraste de ces interférences sur le détecteur, de déterminer la longueur des cavités, ainsi que leurs variations. Connaissant la longueur initiale de la cavité, il permet de déterminer la déformation longitudinale du capteur.

L'analyse des déformations permet d'en déduire les contraintes subies par le béton, ainsi que de détecter les modifications structurelles de la traverse. Les contraintes mécaniques mesurées par un capteur à fibre optique dépendent donc notamment de l'orientation de la partie sensible de la fibre optique.

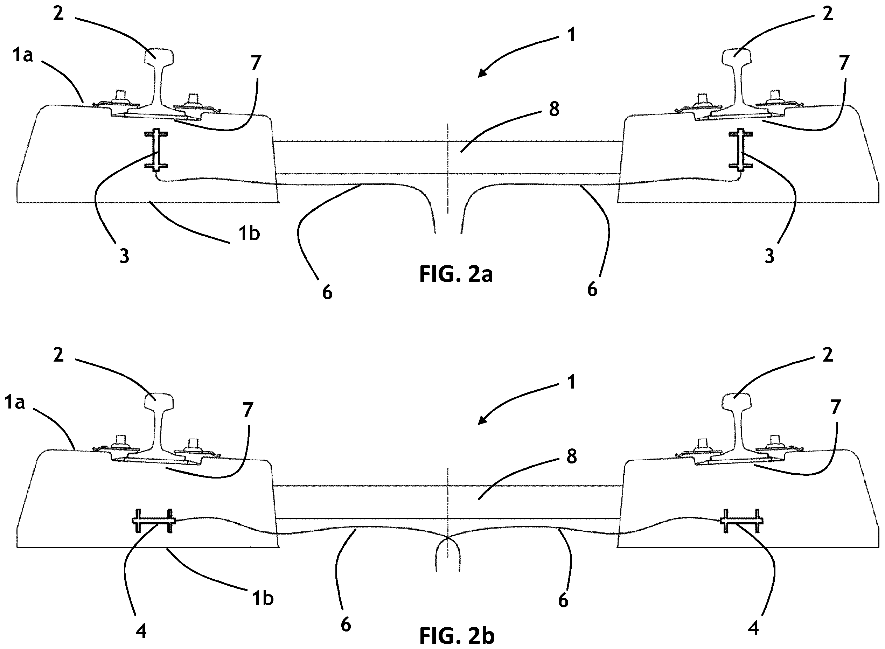

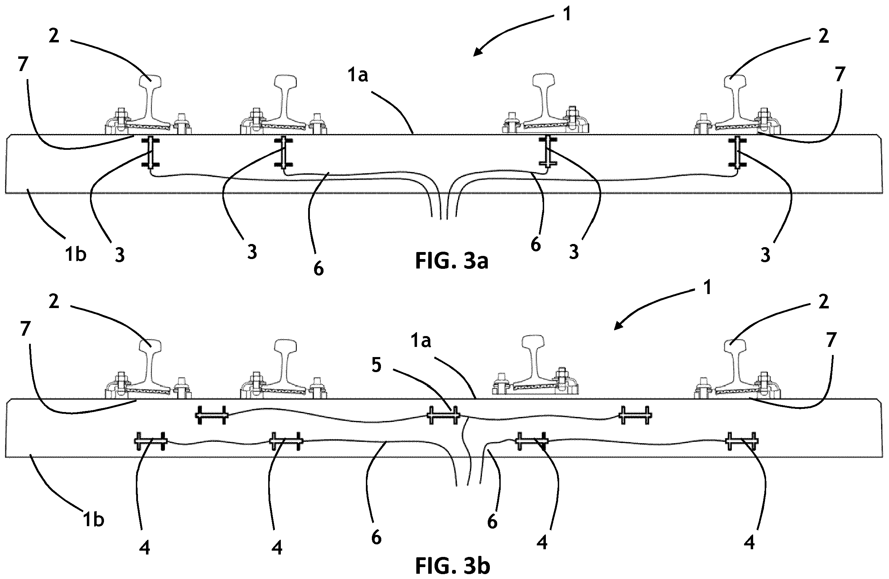

Les figures 1a, 2a et 3a illustrent un premier mode de réalisation d'un support 1 selon l'invention comprenant des instruments de mesure 3 noyés dans le béton sous la forme de capteurs 3 extensométriques à fibre optique. Ce support de rails prend respectivement la forme d'une traverse monobloc en béton sur la figure 1a, d'une traverse bi-bloc sur la figure 2a et d'un support pour appareil de voie sur la figure 3a. Une traverse bi-bloc comprend deux blocs de béton accueillant les emplacements 7 des rails 2, reliés entre eux par une entretoise 8 généralement métallique.

Sur ces figures 1a, 2a et 3a, l'élément sensible des capteurs à fibre optique 3 est orienté dans un plan vertical perpendiculairement à la direction principale du support 1, sous chacun d'au moins deux emplacements 7 destinés à supporter des rails 2, lesdits capteurs 3 étant adaptés pour effectuer des mesures de compression sous chacun des rails 2 afin d'effectuer le pesage d'un essieu d'un véhicule présent sur les rails 2 par mesure des contraintes dans les capteurs 3. On constate sur ces figures que les capteurs 3 présentent une longueur orientée selon un axe vertical reliant la face inférieure 1b et la face supérieure 1a du support de rails.

Afin d'améliorer la mesure de compression dans cette configuration, les capteurs 3 sont disposés au plus près des rails. Comme on peut le constater sur les figures 1a, 2a et 3a, les capteurs 3 à élément sensible orienté dans un plan vertical perpendiculairement à la direction principale du support de rails sont plus proches de la face supérieure 1a dudit support de rails que de la face inférieure 1b dudit support de rails.

La configuration illustrée par les figure 1a, 2a et 3a permet d'obtenir une relation entre compression et mesure qui présente :
- une forte linéarité,
- un comportement dynamique et statique identique,
- une faible dépendance au centrage de la charge sur le support,
- une faible dépendance des conditions d'appui du support sur le ballast ou dalle en béton.

Les figures 1b, 2b et 3b illustrent un deuxième mode de réalisation d'un support selon l'invention comprenant des instruments de mesure noyés dans le béton sous la forme de capteurs 4, 5 extensométriques à fibre optique. Ce support de rails prend respectivement la forme d'une traverse monobloc en béton sur la figure 1b, d'une traverse bi-bloc sur la figure 2b et d'un support pour appareil de voie sur la figure 3b. Une traverse bi-bloc comprend deux blocs de béton accueillant les emplacements 7 des rails 2, reliés entre eux par une entretoise 8 généralement métallique.

Dans ces exemples, le support 1 de rails comporte au moins un capteur extensométrique à élément sensible orienté parallèlement à la direction principale du support 1 sous chacun des emplacements 7 destinés à supporter des rails 2. On constate sur ces figures que les capteurs 4 présentent une longueur orientée selon un axe horizontal sensiblement parallèle à la face inférieure 1b et à la face supérieure 1a du support de rails.

La disposition de ces capteurs permet notamment d'effectuer des mesures de déformation sous les rails 2 perpendiculaire à une charge présente sur les rails 2 afin d'évaluer des moments fléchissant du support 1 de rails en béton. Afin d'améliorer la mesure de déformation, les capteurs 4 à élément sensible orienté parallèlement à la direction principale sont de préférence plus proches de la face inférieure 1b du support 1 que de la face supérieure 1a dudit support 1.

De préférence, dans le cas d'une traverse monobloc telle que représentée figure 1, ou dans le cas d'un support d'appareil de voie, tel que représenté figure 3, ces capteurs 4 à élément sensible orienté parallèlement à la direction principale du support 1 sous chacun des emplacements 7 destinés à supporter des rails 2 sont complétés par au moins un capteur à élément sensible orienté parallèlement à la direction principale du support 1 positionné dans le support 1 en béton entre les emplacements 7 destinés à supporter des rails 2, afin d'améliorer les mesures de déformation. Dans ce cas, le ou les capteurs 5 à élément sensible orienté parallèlement à la direction principale du support 1 positionnés dans le support 1 en béton entre les emplacements 7 destinés à supporter des rails 2 sont positionnés plus proches de la face supérieure 1a que de la face inférieure 1b du support 1 en béton.

Les premiers et seconds modes de réalisation peuvent être combinés, et un support de rails selon l'invention, peut présenter des capteurs à élément sensible orienté parallèlement et perpendiculairement à la direction principale du support 1 en béton, notamment selon les modalités exposées ci-dessus.

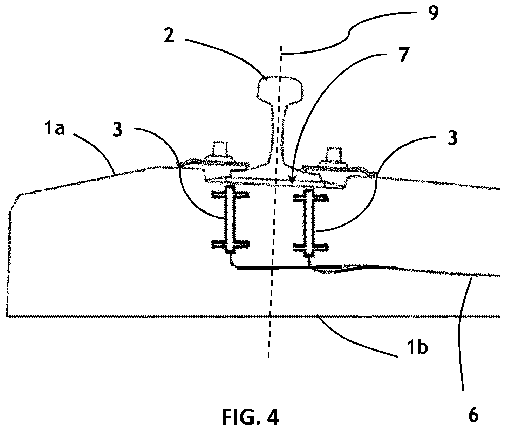

La figure 4 présente un mode de réalisation possible de l'invention selon lequel moins deux capteurs extensométriques à fibre optique 3 noyés dans le béton du support 1 sont localisés de part et d'autre d'un axe 9 correspondant à l'axe de l'âme du rail 2 que le support 1 est destiné à supporter. L'élément sensible, ou corps d'épreuve, de ces capteurs extensiométriques à fibre optique 3 est orienté dans un plan vertical, perpendiculairement à la direction principale du support 1. La disposition de ces capteurs 3 de chaque côté de l'axe 9 correspondant à l'axe de l'âme du rail 2 permet de mesurer les effets du déversement dudit rail 2.

Pour la bonne exploitation des instruments de mesure, l'invention concerne également un système de mesure comprenant au moins un support 1 de rails selon l'invention, et des moyens de connexions 6 des instruments de mesure 3, 4, 5 dudit au moins un support 1 de rails à un dispositif de recueil et de traitement de données pour évaluer les contraintes auxquelles est soumis ledit au moins un support 1 de rails à partir des mesures relevées par lesdits instruments de mesure 3, 4, 5. Le dispositif de recueil et de traitement de données peut être un ordinateur connecté à un émetteur-récepteur, ou bien encore un dispositif dédié.

Ainsi, au moins un desdits instruments de mesure, de préférence tous, est connecté par une liaison filaire 6 à un dispositif de recueil et de traitement de données. Ce lien filaire 6 constituant ledit moyen de connexion permet un accès en continu à la lecture de la mesure réalisée par les capteurs.

Ainsi que relevé plus haut, le dispositif de recueil et de traitement de données peut être éloigné de plusieurs kilomètres dans le cas de capteurs à fibre optique, et les moyens de connexions 6 comprennent alors de la fibre optique apte à transmettre les signaux réfléchis jusqu'au dispositif de recueil et de traitement de données ou à un dispositif intermédiaire, par exemple un convertisseur ou un répétiteur.

Ainsi, grâce à l'invention, on peut notamment, à titre d'exemple non limitatif:
- déterminer le poids d'une charge, par exemple d'un essieu, passant sur les rails à haute vitesse,
- évaluer les moments fléchissant au sein du support de rail,
- détecter les fissurations, et plus généralement les altérations de la structure du support de rails,
- vérifier le dimensionnement des supports de rails en connaissant les sollicitations réelles auxquelles ils sont soumis en voie,
- estimer le coefficient de répartition des charges entre les supports de rail,
- détecter des défauts de matériel roulant,
- connaitre l'impact de la vitesse sur les supports de rail.

## Revendications

1. Support (1) en béton de rails de voie ferrée présentant
- des emplacements (7) destinés à supporter des rails (2),
- une direction principale selon laquelle sont répartis lesdits emplacements (7) destinés à supporter des rails,
le support (1) comportant des instruments de mesure (3, 4, 5) noyés dans le béton constituant ledit support (1), **caractérisé en ce qu'**au moins un desdits instruments de mesure est un capteur extensométrique à fibre optique (3, 4, 5) noyé dans le béton dudit support (1) afin de mesurer les contraintes subies par le béton, ledit capteur en fibre optique (3, 4, 5) comportant un élément sensible s'étendant selon une direction.

2. Support (1) selon la revendication 1, dans lequel des instruments de mesure (3, 4) sont noyés dans le béton du support (1) en regard des emplacements (7) destinés à supporter les rails (2).

3. Support (1) selon l'une quelconque des revendications précédentes, **caractérisé en ce que** ledit au moins un capteur extensométrique à fibre optique comporte un élément sensible inscrit ou inclus dans la fibre optique.

4. Support (1) selon l'une quelconque des revendications précédentes, **caractérisé en ce que** ledit au moins un capteur extensométrique à fibre optique est un capteur interférométrique.

5. Support (1) selon l'une quelconque des revendications précédentes, dans lequel l'élément sensible dudit capteur en fibre optique (3) est orienté dans un plan vertical, perpendiculairement à la direction principale du support (1).

6. Support (1) selon la revendication précédente, comportant au moins un capteur (3) à élément sensible orienté dans un plan vertical, perpendiculairement à la direction principale sous chacun d'au moins deux emplacements (7) destinés à supporter des rails (2), lesdits capteurs (3) étant adaptés pour effectuer des mesures de compression sous chacun des rails (2) afin d'effectuer le pesage d'un essieu d'un véhicule présent sur les rails (2) par mesure des contraintes dans les capteurs (3).

7. Support (1) selon l'une quelconque des revendications précédentes, dans lequel l'élément sensible dudit capteur en fibre optique (4, 5) est orienté parallèlement à la direction principale du support (1).

8. Support (1) selon la revendication précédente, comportant au moins un capteur (4) à élément sensible orienté parallèlement à la direction principale du support (1) sous chacun des emplacements (7) destinés à supporter des rails (2) et/ou entre chacun des emplacements (7) destinés à supporter des rails (2), lesdits capteurs (4, 5) à élément sensible orienté parallèlement à la direction principale du support (1) étant adaptés pour effectuer des mesures de déformation du support (1) sous une charge présente sur les rails (2) afin d'évaluer des moments fléchissant au sein dudit support (1) en béton.

9. Support (1) selon l'une des revendications précédentes, dans lequel au moins un desdits instruments de mesure est un capteur de température.

10. Support (1) selon l'une des revendications précédentes, dans lequel le capteur extensométrique à fibre optique présente une extension de son corps d'épreuve dans sa direction principale d'au moins 5 cm.

11. Support (1) selon l'une des revendications précédentes, dans lequel au moins deux capteurs extensométriques noyés dans le béton du support (1) sont localisés de part et d'autre d'un axe correspondant à l'axe de l'âme du rail que le support (1) est destiné à supporter.

12. Système de mesure comprenant au moins un support (1) en béton selon l'une quelconque des revendications précédentes, et des moyens de connexions (6) des instruments de mesure (3, 4, 5) dudit au moins un support (1) en béton à un dispositif de recueil et de traitement de données pour évaluer les contraintes auxquelles est soumis ledit au moins un support (1) en béton à partir des mesures relevées par lesdits instruments de mesure (3, 4, 5).

13. Système selon la revendication précédente, dans lequel au moins un desdits instruments de mesure est connecté par une liaison filaire (6) au dispositif de recueil et de traitement de données.

## Patentansprüche

1. Betonschwelle (1) für Eisenbahnschienen, die Folgendes umfasst:
- Stellen (7), die dazu bestimmt sind, Schienen (2) zu unterstützen,
- eine Hauptrichtung, in der die Stellen (7), die dazu bestimmt sind, Schienen zu unterstützen, verteilt sind,
wobei die Schwelle (1) Messinstrumente (3, 4, 5) umfasst, die in dem Beton, der die Schwelle (1) bildet, versenkt sind, **dadurch gekennzeichnet, dass** mindestens eines der Messinstrumente ein Glasfaser-Dehnungssensor (3, 4, 5) ist, der in dem Beton der Schwelle (1) versenkt ist, um die Beanspruchungen zu messen, denen der Beton unterliegt, wobei der Glasfasersensor (3, 4, 5) ein empfindliches Element umfasst, das sich in eine Richtung erstreckt.

2. Schwelle (1) nach Anspruch 1, wobei die Messinstrumente (3, 4) in dem Beton der Schwelle (1) den Stellen (7), die zum Unterstützen der Schienen (2) bestimmt sind, gegenüberliegend versenkt sind.

3. Schwelle (1) nach einem der vorhergehenden Ansprüche, **dadurch gekennzeichnet, dass** der mindestens eine Glasfaser-Dehnungssensor ein empfindliches Element umfasst, das in der Glasfaser einbeschrieben oder enthalten ist.

4. Schwelle (1) nach einem der vorhergehenden Ansprüche, **dadurch gekennzeichnet, dass** der mindestens eine Glasfaser-Dehnungssensor ein interferometrischer Sensor ist.

5. Schwelle (1) nach einem der vorhergehenden Ansprüche, wobei das empfindliche Element des Glasfasersensors (3) in einer vertikalen Ebene senkrecht zur Hauptrichtung der Schwelle (1) ausgerichtet ist.

6. Schwelle (1) nach dem vorhergehenden Anspruch, die mindestens einen Sensor (3) mit empfindlichem Element aufweist, das in einer vertikalen Ebene senkrecht zur Hauptrichtung unter jeder von mindestens zwei Stellen (7) ausgerichtet ist, die zum Unterstützen von Schienen (2) bestimmt sind, wobei die Sensoren (3) angepasst sind, um Druckmessungen unter jeder der Schienen (2) durchzuführen, um das Wiegen einer Achse eines auf den Schienen (2) vorhandenen Fahrzeugs durch Messen der Beanspruchungen in den Sensoren (3) durchzuführen.

7. Schwelle (1) nach einem der vorhergehenden Ansprüche, wobei das empfindliche Element des Glasfasersensors (4, 5) parallel zur Hauptrichtung der Schwelle (1) ausgerichtet ist.

8. Schwelle (1) nach dem vorhergehenden Anspruch, die mindestens einen Sensor (4) mit empfindlichem Element umfasst, das parallel zur Hauptrichtung der Schwelle (1) unter jeder der Stellen (7), die dazu bestimmt sind, Schienen (2) zu unterstützen, und/oder zwischen jeder der Stellen (7), die dazu bestimmt sind, Schienen (2) zu unterstützen, ausgerichtet ist, wobei die Sensoren (4, 5) mit empfindlichem Element, das parallel zur Hauptrichtung der Schwelle (1) ausgerichtet ist, angepasst sind, um Messungen der Verformung der Schwelle (1) unter einer auf den Schienen (2) vorhandenen Last durchzuführen, um Biegemomente in der Betonschwelle (1) zu bewerten.

9. Schwelle (1) nach einem der vorhergehenden Ansprüche, wobei mindestens eines der Messinstrumente ein Temperatursensor ist.

10. Schwelle (1) nach einem der vorhergehenden Ansprüche, wobei der Glasfaser-Dehnungsmesser eine Ausdehnung seines Prüfkörpers in seiner Hauptrichtung von mindestens 5 cm aufweist.

11. Schwelle (11) nach einem der vorhergehenden Ansprüche, wobei mindestens zwei in dem Beton der Schwelle (1) versenkte Dehnungsmesser sich auf beiden Seiten einer Achse befinden, die der Achse des Stegs der Schiene entspricht, zu deren Unterstützung die Schwelle (1) bestimmt ist.

12. Messsystem, das mindestens eine Betonschwelle (1) nach einem der vorhergehenden Ansprüche, und Mittel zur Verbindung (6) der Messinstrumente (3, 4, 5) der mindestens einen Betonschwelle (1) mit einer Vorrichtung zur Erfassung und Verarbeitung von Daten zum Bewerten der Beanspruchungen, denen die mindestens eine Betonschwelle (1) unterliegt, ausgehend von den durch die Messinstrumente (3, 4, 5) aufgenommenen Messungen, umfasst.

13. System nach dem vorhergehenden Anspruch, wobei mindestens eines der Messinstrumente durch eine Drahtverbindung (6) mit der Datenerfassungs- und Verarbeitungsvorrichtung verbunden ist.

## Claims

1. Concrete sleeper (1) for railway rails having:
- locations (7) intended for supporting rails (2),
- a main direction in which are distributed said locations (7) intended for supporting rails,
the supporting sleeper (1) including measurement instruments (3, 4, 5) embedded in the concrete forming said sleeper (1), **characterized in that** at least one of said measurement instruments is an optical fiber extensometer sensor (3, 4, 5) embedded in the concrete of said sleeper (1) in order to measure the stresses undergone by the concrete, said optical fiber sensor (3, 4, 5) including a sensitive element extending along a direction.

2. The sleeper (1) according to claim 1, wherein measurement instruments (3, 4) are embedded in the concrete of the sleeper (1) facing the locations (7) intended for supporting the rails (2).

3. The sleeper (1) according to any of the preceding claims, **characterized in that** said optical fiber extensometer sensor includes one sensitive element inscribed or included in the optical fiber.

4. The sleeper (1) according to any of the preceding claims, **characterized in that** said at least one optical fiber extensometer sensor is an interferometric sensor.

5. The sleeper (1) according to any of the preceding claims, wherein the sensitive element of said optical fiber sensor (3) is oriented in a vertical plane, perpendicularly to the main direction of the sleeper (1).

6. The sleeper (1) according to the preceding claim, including at least one sensor (3) with a sensitive element oriented in a vertical plane, perpendicularly to the main direction under each of at least two locations (7) intended for supporting rails (2), said sensors (3) being adapted for carrying out compression measurements under each of the rails (2), in order to carry out weighing of an axle of a vehicle present on the rails (2) by measuring the stresses in the sensors (3).

7. The sleeper (1) according to any of the preceding claims, wherein the sensitive element of said optical fiber sensor (4, 5) is oriented parallel to the main direction of the sleeper (1).

8. The sleeper (1) according to the preceding claim, including at least one sensor (4) with a sensitive element oriented parallel to the main direction of the sleeper (1) under each of the locations (7) intended for supporting rails (2), and/or between each of the locations (7) intended for supporting rails (2), said sensors (4, 5) with a sensitive element oriented parallel to the main direction of the sleeper (1) being adapted for carrying out deformation measurements of the sleeper (1) under a load present on the rails (2) in order to evaluate the bending moments within said concrete sleeper (1).

9. The sleeper (1) according to one of the preceding claims, wherein at least one of said measurement instruments is a temperature sensor.

10. The sleeper (1) according to one of the preceding claims, wherein the optical fiber extensometer sensor has an extension of its test body in its main direction of at least 5 cm.

11. The sleeper (1) according to one of the preceding claims, wherein at least two extensometer sensors embedded in the concrete of the sleeper (1) are localized on either side of an axis corresponding to the axis of the core of the rail which the sleeper (1) is intended to support.

12. A measurement system comprising at least one concrete sleeper (1) according to any of the preceding claims, and means (6) for connection of the measurement instruments (3, 4, 5) of said at least one concrete sleeper (1) to a device for collecting and processing data in order to evaluate the stresses to which is subject said at least one concrete sleeper (1) from measurements taken by said measurement instruments (3, 4, 5).

13. The system according to the preceding claim, wherein at least one of said measurement instruments is connected through a wire connection (6) to the data collecting and processing device.
